# EUROPÄISCHE PATENTSCHRIFT

(11) **EP 0 668 817 B1**
(45) Veröffentlichungstag und Bekanntmachung des Hinweises auf die Patenterteilung: **23.09.1998**
(21) Anmeldenummer: 94922165.9
(22) Anmeldetag: 11.08.1994
(51) Int. Cl.: B29C 45/17

(54) **SPRITZGIESSMASCHINE**
INJECTION MOULDING MACHINE
MACHINE DE MOULAGE PAR INJECTION

(30) Priorität: 11.08.1993 AT 1601/93; 02.09.1993 AT 1763/93
(43) Veröffentlichungstag der Anmeldung: 30.08.1995
(73) Patentinhaber: Engel Maschinenbau Gesellschaft m.b.H., A-4311 Schwertberg (AT)
(72) Erfinder: LAMPL, Alfred, A-4311 Schwertberg (AT); LEONHARTSBERGER, Heinz, A-4311 Schwertberg (AT); URBANEK, Otto, A-4020 Linz (AT); WIMBAUER, Gerhard, A-4311 Schwertberg (AT); NADERHIRN, Helmut, A-4320 Perg (AT)
(74) Vertreter: Hofinger, Engelbert, DDr.
(86) Internationale Anmeldenummer: AT9400112
(87) Internationale Veröffentlichungsnummer: WO9504643

(56) Entgegenhaltungen:
- EP-A- 0 311 133
- EP-A- 0 543 773
- DE-U- 9 212 480
- FR-A- 1 133 677
- US-A- 3 111 053
- US-A- 3 386 324

## Beschreibung

Die Erfindung bezieht sich auf eine Spritzgießmaschine mit einem Maschinenrahmen, einer ortsfesten und einer bewegbaren Formaufspannplatte und einem von einer Stirnplatte des Maschinenrahmens getragenen hydraulischen oder elektromechanischen Schließmechanismus, der einen gegenüber der Stirnplatte bewegbaren Schließstempel aufweist, mit dem die bewegbare Formaufspannplatte auf am Maschinenrahmen vorgesehenen Führungsschienen verfahrbar ist, wobei die Stirnplatte, an der die bewegbare Formplatte abgestützt ist, und die ortsfeste Formaufspannplatte ausschließlich über den Maschinenrahmen verbunden sind und die miteinander verriegelten Formaufspannplatten sich unter dem Einfluß der Schließkraft geringfügig aus einer senkrecht zum Maschinenrahmen verlaufenden Ebene neigen und zwischen Schließstempel und bewegbarer Formaufspannplatte ein Gelenk vorgesehen ist.

Eine derartige Spritzgießmaschine ist aus der EP-A-0 311 133 bekannt. Holmlose Spritzgießmaschinen bieten einen besseren Zugang zum Formwerkzeug, wodurch beispielsweise die Umrüstzeiten wesentlich herabgesetzt werden können. Insgesamt zeichnen sie sich durch freie Zugänglichkeit des Werkzeugbereiches, der Einsatzmöglichkeit von sperrigen Werkzeugen, durch bessere Maschinennutzung und durch die Einsetzmöglichkeit automatischer Werkzeugwechsler aus.

Es hat sich gezeigt, daß bei einem sehr starken Schließkraftaufbau die ortsfeste Formaufspannplatte und die Stirnplatte, an der sich der Schließmechanismus abstützt, auseinandergedrückt werden. Damit sich die bewegbare Formaufspannplatte der ortsfesten Formaufspannplatte optimal anpassen kann, muß sie nicht nur eine Kippbewegung, sondern auch eine Bewegung entlang ihrer Vertikalebene durchführen.

Aufgabe der Erfindung ist es, eine Lagerung für die bewegbare Formaufspannplatte zu schaffen, die es auf einfache kostengünstige Art dieser ermöglicht, sich optimal der Bewegung der ortsfesten Formaufspannplatte anzupassen und die somit ein absolut dichtes Formwerkzeug garantiert.

Die erfindungsgemäße Aufgabe wird dadurch gelöst, daß das Gelenk einen deformierbaren Kupplungsteil umfaßt, dessen Material sich deformiert, wenn die Schließkraft durch den Schließmechanismus aufgebracht wird.

Durch die erfindungsgemäße Ausführung wirkt die Schließkraft trotz einfacher achszapfenloser Konstruktion immer normal auf die Trennebene des Werkzeuges, wodurch die absolute Dichtheit des Werkzeuges während des Einspritzvorganges gewährleistet ist.

Ein achsloses 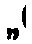 Gelenk" ist zwar aus der US-A-3,386,324 im weitesten Sinn bekannt, die erfindungsgemäße Idee der Deformierbarkeit eines Kupplungsteiles ist jedoch der genannten US-A-3,386,324 nirgends zu entnehmen.

Die erfindungsgemäße holmlose Spritzgießmaschine kann selbstverständlich sowohl als Horizontalmaschine als auch als Vertikalmaschine ausgeführt sein. Der erfindungsgemäße Schließmechanismus kann ebenso vorteilhaft bei Spritzgießmaschinen und Formpreßmaschinen eingesetzt werden.

Nachfolgend wird ein Ausführungsbeispiel der Erfindung anhand der Figuren der beiliegenden Zeichnungen eingehend beschrieben. Beim gezeigten Ausführungsbeispiel handelt es sich um eine Horizontalmaschine und Spritzgießmaschine.
Die Fig. 1 zeigt eine Seitenansicht auf ein Ausführungsbeispiel einer erfindungsgemäßen Spritzgießmaschine,
die Fig. 2 zeigt einen Schnitt nach der Linie A-B der Fig. 1,
die Fig. 3 zeigt die Oberansicht auf Fig. 1,
die Fig. 4 zeigt die Unteransicht auf Fig. 1,

Der die Belastung aufnehmende Maschinenrahmen 1 weist zwei Wangen auf, die mit dem Maschinenrahmen 1 aus einem Stück gefertigt sind und stützt die ortsfeste Formaufspannplatte 2 und die Stirn- bzw. Zylinderplatte 3 ab. Die Stirn- bzw. Zylinderplatte 3 kann auch einstückig mit dem Maschinenrahmen 1 ausgebildet sein. Der Maschinenrahmen 1 wird vorteilhaft auf einen Grundrahmen (nicht dargestellt) aufgelegt. Grundrahmen und Maschinenrahmen 1 können aber auch aus einem Stück gefertigt werden. Der Maschinenrahmen 1 wird vorzugsweise aus Grobblech (ST.52.3) gefertigt. Die ortsfeste Formaufspannplatte 2 ist am Maschinenrahmen befestigt und trägt eine Werkzeughälfte 4.

Der Maschinenrahmen 1 ist einstückig mit der ortsfesten Formaufspannplatte 2 und der Zylinderplatte 3 gefertigt; d.h., die Formaufspannplatte 2 und die Zylinderplatte 3 sind am Maschinenrahmen 1 angeformt bzw. auf diesem fest montiert.

Bei der Formaufspannplatte 2 ist wie üblich das nicht dargestellte Spritzaggregat mit dem Zuführtrichter für die Granulatzufuhr gelagert. Auf das Spritzaggregat soll in diesem Rahmen nicht weiter eingegangen werden, es bildet nicht Gegenstand der Erfindung und ist nach dem Stand der Technik gefertigt.

Die Zylinderplatte 3 trägt eine Kolben-Zylindereinheit 7, deren Kolben 5 mit der bewegbaren Formaufspannplatte 8 verbunden ist und die den Schließmechanismus bildet.

Die bewegbare Formaufspannplatte 8 trägt ebenso eine Formzeughälfte 4.

Mittels der Kolben-Zylindereinheit 7 wird die bewegbare Formaufspannplatte 8 während des Spritzvorganges mit der Formhälfte 4 gegen die Formhälfte 4 der ortsfesten Formaufspannplatte 2 gehalten.

Bei einer Schließeinheit bei der eine hohe Schließkraft holmlos ausschließlich über den Rahmen 1 übertragen wird, könnte es zu einem Aufklaffen im oberen Werkzeugbereich, d. h. zwischen den beiden Formhälften 4 kommen.

Zwischen dem Kolben 5 der Kolben-Zylindereinheit 7 und der bewegbaren Formaufspannplatte 8 ist ein achsloses Gelenk 13 vorgesehen. Durch dieses achslose Gelenk 13 (deformierbarer Kupplungsteil) kann sich die bewegbare Formaufspannplatte 8 mit ihrer Formhälfte 4 bei hoher Schließkraft an die ortsfeste Formaufspannplatte 2 mit der zugehörigen Formhälfte 4 parallel anlegen.

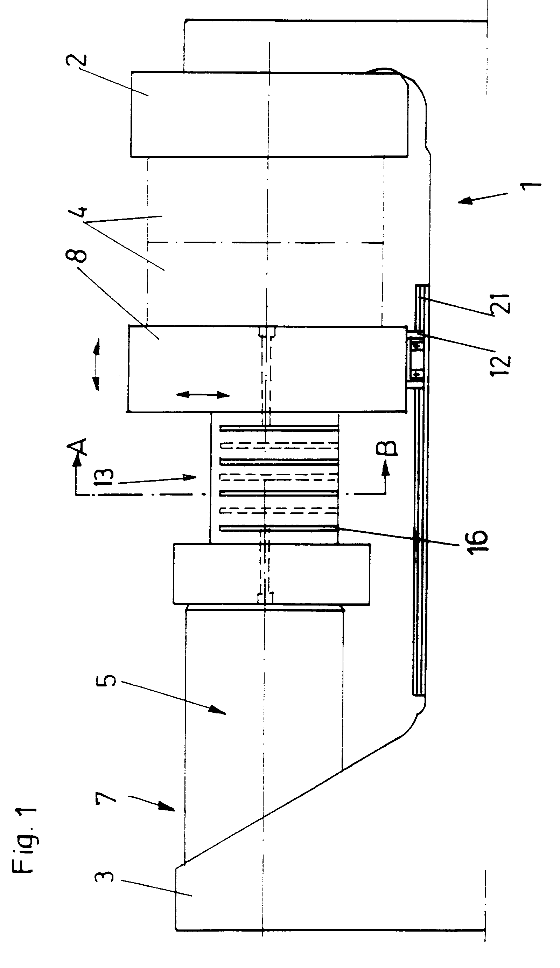

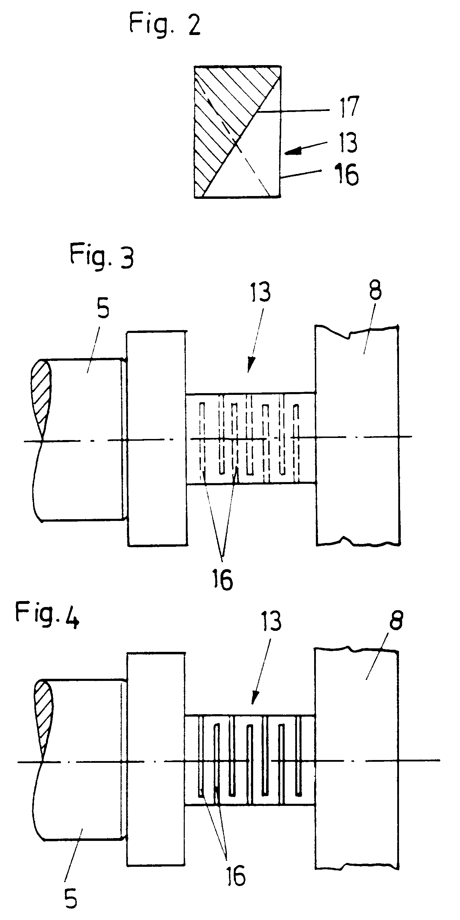

Beim dargestellten Ausführungsbeispiel nach den Fig. 1 bis 4 wird das Gelenk 13 von einem deformierbaren Kupplungsteil mit rechteckigem Querschnitt gebildet, der mit einander entgegengerichteten Einschnitten 16 versehen ist. Die Einschnitte 16 erstrecken sich jeweils über annähernd die halbe Querschnittsfläche mit einem diagonal verlaufenden Nutgrund 17. Durch die Einschnitte 16 ist der das Gelenk 13 bildende Kupplungsteil selbstverständlich in äußerst geringem Maße wie ein Leporello kippbar und zusammendrückbar, sodaß die bewegbare Formaufspannplatte 8 unter Schließdruck eine Bewegung macht den beiden Pfeilen der Fig. 1 durchführen kann. D. h. die bewegbare Formaufspannplatte 8 wird um eine horizontale Achse gekippt und kann dabei gleichzeitig von den Schienen 21 abgehoben werden.

Es ist wesentlich, daß durch diese Ausführung der Schließeinheit einer Spritzgießmaschine der Raum zwischen den Formaufspannplatten 2, 8 frei ist und daher die Werkzeughälften 4 gut zugänglich sind.

## Patentansprüche

1. Spritzgießmaschine mit einem Maschinenrahmen, einer ortsfesten (2) und einer bewegbaren (8) Formaufspannplatte und einem von einer Stirnplatte des Maschinenrahmens getragenen hydraulischen oder elektromechanischen Schließmechanismus (7), der einen gegenüber der Stirnplatte bewegbaren Schließstempel (5) aufweist, mit dem die bewegbare Formaufspannplatte (8) auf am Maschinenrahmen (1) vorgesehenen Führungsschienen (21) verfahrbar ist, wobei die Stirnplatte, an der die bewegbare Formplatte (8) abgestützt ist, und die ortsfeste Formaufspannplatte (2) ausschließlich über den Maschinenrahmen (1) verbunden sind und die miteinander verriegelten Formaufspannplatten (2,8) sich unter dem Einfluß der Schließkraft geringfügig aus einer senkrecht zum Maschinenrahmen (1) verlaufenden Ebene neigen und zwischen Schließstempel (5) und bewegbarer Formaufspannplatte (8) ein Gelenk vorgesehen ist, dadurch gekennzeichnet, daß das Gelenk (13) einen deformierbaren Kupplungsteil umfaßt, dessen Material sich deformiert, wenn die Schließkraft durch den Schließmechanismus aufgebracht wird.

2. Spritzgießmaschine nach Anspruch 1, dadurch gekennzeichnet, daß der Kupplungsteil einen als Gelenk (13) wirkenden verbiegbaren Bereich aufweist, der beim Aufbringen der Schließkraft verbogen wird.

3. Spritzgießmaschine nach Anspruch 2, dadurch gekennzeichnet, daß das Kupplungsteil leporelloartig ausgebildet ist und mehrere einander entgegengerichtete und jeweils in etwa die halbe Querschnittsfläche des Kupplungsteiles durchdringenden Schlitze (16) aufweist und so das Gelenkt (13) bildet.

## Claims

1. Injection moulding machine with a machine frame, one stationary (2) and one moveable (8) die platen and, carried on an end plate of the machine frame, a hydraulic or electro-mechanical closing mechanism (7) which is provided with a closing piston (5) moveable with respect to the end plate, with which closing mechanism the moveable die platen (8) can be displaced on guide rails (21) provided on the machine frame (1), wherein the end plate upon which the moveable die (8) is supported and the stationary die platen (2) are connected exclusively by means of the machine frame (1) and the die platens (2, 8) locked together are inclined, under the influence of the closing force, slightly out of a plane perpendicular to the machine frame (1), and a hinge is provided between the close piston (5) and moveable die platen (8), characterised in that the hinge (13) comprises a deformable coupling part, the material of which deforms when the closing force is applied by means of the closing mechanism.

2. Injection moulding machine according to to claim 1, characterised in that the coupling part is provided with a flexible area acting as a hinge (13), which is bent when the closing force is applied.

3. Injection moulding machine according to claim 2, characterised in that the coupling part is constructed in the manner of a concertina, and is provided with a plurality of slits (18) directed in opposite directions to one another, each penetrating approximately half the cross-sectional area of the coupling part, and thus forms the hinge (13).

## Revendications

1. Machine de moulage par injection comportant un châssis, un plateau porte-moule fixe (2) et un plateau porte-moule mobile (8) et un mécanisme de fermeture hydraulique ou électromécanique (7), porté par une plaque frontale du châssis de la machine et qui possède un poinçon de fermeture (5) déplaçable par rapport à la plaque frontale et à l'aide duquel la plaque porte-moule mobile (8) est déplaçable sur des rails de guidage (21) prévus sur le châssis (1) de la machine, la plaque frontale, sur laquelle le plateau porte-moule mobile (8) prend appui, et le plateau porte-moule fixe (2) étant reliés exclusivement par l'intermédiaire du chassis (1) de la machine et les plateaux porte-moule (2, 8) verrouillés l'un à l'autre s'inclinant légèrement, sous l'influence de la force de fermeture, par rapport à un plan perpendiculaire au châssis (1) de la machine, tandis qu'une articulation est prévue entre le poinçon de fermeture (5) et le plateau porte-moule mobile (8), caractérisé en ce que l'articulation (13) comprend une pièce d'accouplement déformable, dont le matériau se déforme lorsque la force de fermeture est appliquée par le mécanisme de fermeture.

2. Machine de moulage par injection selon la revendication 1, caractérisée en ce que la pièce d'accouplement possède une partie flexible, qui agit en tant qu'articulation (13) et fléchit lors de l'application de la force de fermeture.

3. Machine de moulage par injection selon la revendication 2, caractériseée en ce que la pièce d'accouplement est agencée en zig-zag et comporte plusieurs fentes (16) qui sont dirigées en des sens opposés et traversent respectivement approximativement la moitié de la surface en coupe transversale de la pièce d'accouplement et forme ainsi l'articulation (13).
